# EUROPÄISCHE PATENTANMELDUNG

(11) **EP 4 001 224 A1**
(43) Veröffentlichungstag der Anmeldung: **25.05.2022**
(21) Anmeldenummer: 21206762.3
(22) Anmeldetag: 05.11.2021
(51) Int. Cl.: C02F 11/13, F26B 3/24, F26B 11/16, F26B 25/22

(54) **TROCKNUNGSANLAGE SOWIE VERFAHREN ZUM TROCKNEN VON ENTWÄSSERTEM KLÄRSCHLAMM**

(30) Priorität: 12.11.2020 DE 102020129822
(71) Anmelder: Huber SE, 92334 Berching (DE)
(72) Erfinder: Heindl, Albert, 92364 Deining (DE); Friedrich, Dominik, 91522 Ansbach (DE)
(74) Vertreter: Canzler & Bergmeier Patentanwälte Partnerschaft mbB

(57) **Zusammenfassung**

Die Erfindung betrifft eine Trocknungsanlage (1), umfassend einen Scheibenkontakttrockner (2) zum Trocknen von teilentwässertem Klärschlamm (3), wobei der Scheibenkontakttrockner (2) einen Einlass (4) für den Klärschlamm (3), einen Trocknungsraum (5) zur temporären Aufnahme des Klärschlamms (3), mehrere innerhalb des Trocknungsraums (5) benachbart zueinander angeordnete und mit Hilfe eines Antriebs (20) mit einer definierten Drehzahl rotierende Scheiben (6), und einen Auslass (7) für den im Trocknungsraum (5) getrockneten Klärschlamm (3) aufweist. Erfindungsgemäß wird vorgeschlagen, dass die Trocknungsanlage (1) einen Eingangssensor (8) zur Ermittlung der Anfangsfeuchte des Klärschlamms (3) und einen Ausgangssensor (9) zur Ermittlung der Endfeuchte des Klärschlamms (3) aufweist, und dass die Trocknungsanlage (1) eine Steuerung (10) umfasst, die ausgebildet ist, die Drehzahl der Scheiben (6) und/oder die Heizleistung des Scheibenkontakttrockners (2) und/oder die Menge des über den Einlass (4) in den Trocknungsraum (5) eintretenden zu trocknenden Klärschlamms (3) und/oder die Menge des über den Auslass (7) aus dem Trocknungsraum (5) austretenden getrockneten Klärschlamms (3) basierend auf den Messdaten des Eingangssensors (8) und des Ausgangssensors (9) zu regeln. Ferner wird ein Verbund aus einer Trocknungsanlage (1) und einer Verbrennungsanlage (18) sowie ein Verfahren zum Betreiben einer Trocknungsanlage (1) beschrieben.

## Beschreibung

Die vorliegende Erfindung betrifft eine Trocknungsanlage, umfassend einen Scheibenkontakttrockner zum Trocknen von entwässertem Klärschlamm, wobei der Scheibenkontakttrockner umfasst: zumindest einen Einlass für den zu trocknenden Klärschlamm, einen sich an den Einlass anschließenden Trocknungsraum zur temporären Aufnahme des über den Einlass eintretenden zu trocknenden Klärschlamms, mehrere innerhalb des Trocknungsraums benachbart zueinander angeordnete Scheiben, die im Betrieb des Scheibenkontakttrockners mit dem Klärschlamm in Kontakt stehen und mit Hilfe eines Antriebs des Scheibenkontakttrockners mit einer definierten Drehzahl rotiert werden, wobei die Scheiben mit einer definierten Heizleistung beaufschlagt werden, um dem zu trocknenden Klärschlamm Wärme zuzuführen und dabei eine Verdampfung der im zu trocknenden Klärschlamm vorhandenen Flüssigkeit zu bewirken, und wobei der Scheibenkontakttrockner darüber hinaus zumindest einen Auslass für den im Trocknungsraum getrockneten Klärschlamm umfasst.

Ferner wird ein Verbund aus einer entsprechenden Trocknungsanlage und einer Verbrennungsanlage zur Verbrennung des aus der Trocknungsanlage stammenden getrockneten Klärschlamms sowie ein Verfahren zum Betreiben einer Trocknungsanlage, insbesondere einer erfindungsgemäßen Trocknungsanlage, vorgeschlagen, wobei die Trocknungsanlage einen Scheibenkontakttrockner mit einem Trocknungsraum zum Trocknen von entwässertem Klärschlamm, und mit mehreren innerhalb des Trocknungsraums benachbart zueinander angeordneten Scheiben, umfasst, die im Betrieb des Scheibenkontakttrockners mit dem Klärschlamm in Kontakt stehen und mit einer definierten Heizleistung beaufschlagt werden, um dem zu trocknenden Klärschlamm Wärme zuzuführen und dabei eine Verdampfung der im zu trocknenden Klärschlamm vorhandenen Flüssigkeit zu bewirken.

Gattungsgemäße Trocknungsanlagen kommen beim Trocknen von entwässertem Klärschlamm zum Einsatz, wobei der Klärschlamm in der Regel aus einer oder mehreren Kläranlage(n) stammt. Bevor der aus der Kläranlage stammende Klärschlamm der Trocknungsanlage zugeführt wird, wird dieser entwässert, d.h. ein Teil des im Klärschlamm enthaltenen Wassers wird aus dem Klärschlamm mechanisch (beispielsweise durch entsprechende Pressvorrichtungen, z.B. mittels einer Pressschnecke) oder in Absatzbecken entfernt, so dass die Trockenmasse (andere Bezeichnung: Trockensubstanz) des Klärschlamms ansteigt, wobei Entwässerung im Sinne der Erfindung nicht bedeutet, dass die gesamte Flüssigkeit aus dem Klärschlamm entfernt wird. Auch während der Trocknung kommt es lediglich zu einer Verringerung der Feuchte des Klärschlamms, so dass auch der getrocknete Klärschlamm gemäß vorliegender Erfindung noch eine Restfeuchte aufweist.

Der so entwässerte Klärschlamm wird in der Trocknungsanlage über einen Einlass einem Scheibenkontakttrockner zugeführt und gelangt hierbei in einen Trocknungsraum des Scheibenkontakttrockners. Innerhalb des Scheibenkontakttrockners kommt der Klärschlamm mit mehreren Scheiben des Scheibenkontakttrockners in Kontakt, die vorzugsweise mit Hilfe eines Antriebs (vorzugsweise in Form eines Elektromotors) während des Betriebs des Scheibenkontakttrockners in Rotation versetzt werden. Der Antrieb der Scheiben ist vorzugsweise drehzahlgesteuert ausgeführt, um die Mischgüte und damit die spezifische Wasserverdampfung innerhalb des Trocknungsraums beeinflussen zu können. Die Scheiben werden mit einem Heizmedium beaufschlagt, wobei es sich bei dem Heizmedium beispielsweise um heißes Wasser, Wasserdampf oder ein Thermoöl handelt. Das Heizmedium wird den Scheiben hierbei über einen Heizmittelzulauf zugeführt. Innerhalb des Trocknungsraums geben die Scheiben Wärme von dem Heizmittel an den Klärschlamm ab, so dass dieser erwärmt wird und hierbei Wasserdampf (der neben Wasser weitere chemische Verbindungen aufweisen kann) abgibt. Der Wasserdampf wird schließlich über einen Brüdenabzug aus dem Trocknungsraum entfernt. Alternativ wäre es ebenso denkbar, die Scheiben elektrisch zu erwärmen.

Im Ergebnis wird der Wassergehalt (d.h. die Feuchte) des Klärschlamms innerhalb des Scheibenkontakttrockners verringert und damit die Trockenmasse erhöht. Der so getrocknete Klärschlamm verlässt den Scheibenkontakttrockner schließlich über einen Auslass und kann einer weiteren Verwertung, beispielsweise einer Verbrennung, zugeführt werden.

Um die den Scheiben zugeführte Wärmeenergie optimal auszunutzen und die Endfeuchte des den Scheibenkontakttrockner verlassenden Klärschlamms auf einen gewünschten Wert einzustellen, ist es bisher üblich, die Masse des sich im Scheibenkontakttrockner befindlichen Klärschlamms über Wägezellen zu ermitteln, die einem den Trocknungsraum umgebenden Gehäuse zugeordnet sind. Die Masse des Klärschlamms innerhalb des Trocknungsraums wird hierbei basierend auf den Daten der Wägezellen möglichst konstant gehalten, wobei dies durch die Regelung der Menge des über den Einlass in den Trocknungsraum gelangenden Klärschlamms bewirkt wird.

Eine derartige Regelung des Massenstroms des Klärschlamms ist jedoch relativ ungenau, so dass die Energieeffizienz des Scheibenkontakttrockners nicht optimal ist. Auch schwankt die Endfeuchte des den Scheibenkontakttrockner verlassenden Klärschlamms aufgrund der ungenauen Regelung des Scheibenkontakttrockners übermäßig stark, was sich negativ auf die Weiterverarbeitung des Klärschlamms auswirken kann. Beispielsweise kann eine der Trocknungsanlage nachgeordnete Verbrennungsanlage nicht optimal betrieben werden, wenn die Feuchte, d.h. der Wassergehalt, des der Verbrennungsanlage zugeführten Klärschlamms übermäßig schwankt.

Aufgabe der vorliegenden Erfindung ist es daher, eine Trocknungsanlage, einen Verbund aus einer Trocknungsanlage und einer nachgeordneten Verbrennungsanlage sowie ein Verfahren zum Trocknen von Klärschlamm vorzuschlagen, welche den Stand der Technik in vorteilhafter Weise weiterbilden.

Die Aufgabe wird gelöst durch eine Trocknungsanlage, einen Verbund aus einer Trocknungsanlage und einer Verbrennungsanlage sowie einem Verfahren mit den Merkmalen der unabhängigen Patentansprüche.

Erfindungsgemäß zeichnet sich die Trocknungsanlage dadurch aus, dass sie einen Eingangssensor zur Ermittlung der Anfangsfeuchte des zu trocknenden Klärschlamms und einen Ausgangssensor zur Ermittlung der Endfeuchte des im Trocknungsraum getrockneten Klärschlamms aufweist. Die Sensoren sind also ausgebildet, entweder den Wassergehalt bzw. Feuchte oder die Trockenmasse des Klärschlamms zu ermitteln, so dass sich aus den Messwerten der Sensoren die jeweilige Anfangsfeuchte und Endfeuchte des Klärschlamms ermitteln oder berechnen lassen.

Ferner umfasst die Trocknungsanlage eine Steuerung, die vorzugsweise ausgebildet ist, die Heizleistung und/oder die Drehzahl der Scheiben (bzw. des mit den Scheiben, z.B. über eine Welle, verbundenen Antriebs) des Scheibenkontakttrockners, basierend auf den Messdaten des Eingangssensors und des Ausgangssensors zu regeln. Dies ist beispielsweise dadurch möglich, dass die Temperatur oder der Volumenstrom des in die Scheiben einströmenden Heizmediums oder dessen Dampfdruck (wenn es sich bei dem Heizmedium um Wasserdampf handelt) geregelt wird. Ebenso wäre es möglich, die Temperatur der Scheiben durch Änderung der elektrischen Leistung einer die Scheiben erwärmenden elektrischen Heizung zu regeln. Die Drehzahl kann beispielhaft bei Verwendung eines Elektromotors als Antrieb mittels Frequenzumrichter verändert werden.

Zusätzlich oder alternativ ist es ebenso möglich, die Menge des über den Einlass in den Trocknungsraum eintretenden zu trocknenden Klärschlamms und/oder die Menge des über den Auslass aus dem Trocknungsraum austretenden getrockneten Klärschlamms basierend auf den Messwerten des Eingangssensors und des Ausgangssensors zu regeln. Durch die erfindungsgemäße Regelung ist es nun möglich, die Endfeuchte des den Scheibenkontakttrockner verlassenden Klärschlamms unter Berücksichtigung seiner Anfangsfeuchte vor dem Trocknungsschritt genau auf einen gewünschten Wert einzustellen.

Erkennt die Steuerung beispielsweise, dass die Anfangsfeuchte des in den Scheibenkontakttrockner eintretenden Klärschlamms sich über einen bestimmten Zeitabschnitt erhöht, so wäre es beispielsweise denkbar, die pro Zeiteinheit über den Einlass in den Trocknungsraum eintretende Klärschlammmenge zu reduzieren und/oder die Heizleistung des Scheibenkontakttrockners zu erhöhen. Zusätzlich oder alternativ könnte auch die pro Zeiteinheit über den Auslass aus dem Trocknungsraum austretenden Klärschlammmenge reduziert werden.

Im Ergebnis sollte die Steuerung derart ausgebildet sein, dass die Endfeuchte des den Scheibenkontakttrockner verlassenden Klärschlamms stets innerhalb eines definierten Bereichs liegt.

Vorteilhaft ist es zudem, wenn der Einlass mit einer Eingangs-Schlammleitung der Trocknungsanlage oder einer Eingangs-Fördereinrichtung der Trocknungsanlage, die dem Transport des getrockneten Klärschlamms dient, verbunden ist. Bei der Eingangs-Schlammleitung handelt es sich beispielsweise um eine Rohrleitung oder eine Schlauchleitung, insbesondere eine Druckleitung, über die der zu trocknenden Klärschlamm aus einem Speicher oder einer Vorrichtung, mit deren Hilfe Klärschlamm entwässert wird, in Verbindung steht und über die der Klärschlamm z.B. mit Hilfe einer Pumpe in Richtung des Einlasses transportiert wird.

Ebenso ist es denkbar, dass der Einlass direkt mit einer Eingangs-Fördereinrichtung verbunden ist, wobei die Eingangs-Fördereinrichtungen alternativ auch in die Eingangs-Schlammleitung integriert oder mit dieser verbunden sein kann und damit nicht direkt im Bereich des Einlasses angeordnet ist. Bei der Eingangs-Fördereinrichtung handelt es sich um eine Vorrichtung, mit deren Hilfe der Klärschlamm aktiv in Richtung des Einlasses bzw. in den Trocknungsraum transportiert wird. Vorzugsweise handelt es sich bei der Eingangs-Fördereinrichtung um eine Eingangs-Förderschnecke. Ebenso kann eine Kolbenpumpe, eine Exzenter-Schneckenpumpe oder eine vergleichbare Fördereinrichtung zum Einsatz kommen. Auch kann die Eingangs-Fördereinrichtungen als Förderband ausgebildet sein.

Ebenso ist es vorteilhaft, wenn der Auslass mit einer Ausgangs-Schlammleitung der Trocknungsanlage oder einer Ausgangs-Fördereinrichtung der Trocknungsanlage, die dem Transport des getrockneten Klärschlamms dient, verbunden ist, wobei die Ausgangs-Fördereinrichtung insbesondere als Ausgangs-Förderschnecke ausgebildet ist. Die Ausgangs-Schlammleitung kann wiederum als Rohrleitung oder Schlauchleitung ausgebildet sein. Die Ausgangs-Fördereinrichtung kann vergleichbar zur Eingangs-Fördereinrichtung ausgebildet sein und ist entweder in die Ausgangs-Schlammleitung integriert oder mit dieser verbunden oder befindet sich im Bereich des Auslasses des Scheibenkontakttrockners.

Außerdem ist von Vorteil für eine gute Funktion des Scheibenkontakttrockners in Hinblick auf eine maximale Energierückgewinnung aus der Kondensation des über den Brüdenabzug abgezogenen Brüden, dass der Falschlufteintritt in den Trocknungsraum minimiert wird. Dies kann beispielsweise durch die Verwendung von selbstdichtenden Kolbenpumpen oder durch spezielle Schneckenförderer mit Propfenstrombildung durch weggelassene Schneckenflügel erreicht werden.

Des Weiteren ist es vorteilhaft, wenn die Trocknungsanlage einen Eingangsspeicher zum Zwischenspeichern des zu trocknenden Klärschlamms vor der Trocknung umfasst. Bei kleineren Betriebsunterbrechungen der der Trocknungsanlage nachgeordneten Einheit (beispielsweise in Form einer Verbrennungsanlage) kann so der getrocknete Klärschlamm zwischengespeichert werden, ohne dass der Scheibenkontakttrockner stillgelegt werden muss. Bei dem Eingangsspeicher handelt es sich z.B. um einen Klärschlammbunker, in dem eine gewisse Menge an zu trocknendem Klärschlamm zwischengespeichert wird, bis er dem Scheibenkontakttrockner zugeführt wird. Der Eingangsspeicher steht über die Eingangs-Schlammleitung bzw. die Eingangs-Fördereinrichtungen mit dem Trocknungsraum in Verbindung. Zusätzlich oder alternativ ist es ebenso von Vorteil, wenn die Trocknungsanlage einen Ausgangsspeicher zum Zwischenspeichern des getrockneten Klärschlamms vor einer Weiterbehandlung, beispielsweise in einer Verbrennungsanlage oder einer weiteren Trocknungseinrichtung, umfasst.

Auch ist es von Vorteil, wenn der Ausgangsspeicher eine Speicherfördereinrichtung, insbesondere eine Speicherförderschnecke, umfasst, über die der getrocknete Klärschlamm beim Betrieb der Trocknungsanlage in den Ausgangsspeicher gelangt. Die Speicherfördereinrichtung kann beispielsweise mit der Ausgangs-Schlammleitung verbunden sein. Ebenso ist es von Vorteil, wenn die Speicherfördereinrichtung direkt in den Ausgangsspeicher mündet.

Die Speicherfördereinrichtung steht vorzugsweise mit einem Antrieb in Verbindung, so dass sich der Massenstrom des getrockneten Klärschlamms über die Regelung des Antriebs regulieren lässt. Ebenso kann die Speicherfördereinrichtung eine Rohrschnecke umfassen, welche insbesondere fliegend gelagert ist und den Klärschlamm als Pfropfen durch einen ringförmig ausgebildeten Ausgangssensor am Ende des Rohres verblockungsfrei schiebt. Der Rohrdurchmesser liegt beispielsweise zwischen 100 und 300 mm. Die Rohrschnecke kann in im Fallbereich des Klärschlamms nach der Ausgangs-Fördereinrichtung des Scheibenkontakttrockners angeordnet sein, so dass immer und zeitnah eine repräsentative Probe des den Trocknungsraum verlassenden Klärschlamms hinsichtlich seiner Endfeuchte analysiert wird. Der analysierte Klärschlamm wird schließlich in den Ausgangsspeicher abgegeben.

Besondere Vorteile bringt es mit sich, wenn der Ausgangssensor im Bereich der Speicherfördereinrichtung angeordnet ist, wobei die Speicherfördereinrichtung beispielsweise als Förderschnecke, als Förderband, als Kolbenpumpe oder als Exzenter-Schneckenpumpe ausgebildet ist. Der Ausgangssensor ist beispielsweise im Bereich eines Klärschlammausgangs der Speicherfördereinrichtung angeordnet. Insbesondere kann er dem Klärschlammausgang, vorzugsweise ringförmig, umgeben, so dass der Klärschlamm durch den Ausgangssensor fließt. Vorzugsweise kommt der Ausgangssensor hierbei direkt mit dem Klärschlamm in Kontakt.

Des Weiteren ist es vorteilhaft, wenn der Eingangssensor im Bereich des Einlasses, im Bereich der Eingangs-Schlammleitung, im Bereich der Eingangs-Fördereinrichtung oder im Bereich des Eingangsspeichers angeordnet ist. Zusätzlich oder alternativ es von Vorteil, wenn der Ausgangssensor im Bereich des Auslasses, im Bereich der Ausgangs-Schlammleitung, im Bereich der Ausgangs-Fördereinrichtung oder im Bereich des Ausgangsspeichers angeordnet ist.

Auch ist es von Vorteil, wenn der Eingangssensor und/oder der Ausgangssensor als Mikrowellensensor oder Nahinfrarotsensor ausgebildet ist. Insbesondere sollten einer oder beide Sensoren als berührungsloser Sensor ausgebildet sein, d.h., dass der Sensor an einer Stelle platziert ist, an der er nicht direkt mit dem Klärschlamm in Kontakt gelangt. Beispielsweise kann der entsprechende Sensor über ein Scheibenglas oder eine sonstige räumliche Abtrennung von dem Klärschlamm räumlich getrennt sein. Insbesondere ist es von Vorteil, wenn der Mikrowellensensor ringförmig um die Eingangs-Schlammleitung oder die Ausgangs-Schlammleitung platziert ist, so dass der Klärschlamm durch den Mikrowellensensor hindurchströmen muss.

Der erfindungsgemäße Verbund umfasst eine Trocknungsanlage, insbesondere mit einem oder mehreren der zuvor beschriebenen Merkmale, sowie eine der Trocknungsanlage nachgeschaltete Verbrennungsanlage, mit deren Hilfe der zuvor getrocknete Klärschlamm verbrannt werden kann. Ferner umfasst der Verbund eine Steuereinheit, die ausgebildet ist, die Drehzahl der Scheiben und/oder die Heizleistung und/oder die Menge des über den Einlass in den Trocknungsraum des Scheibenkontakttrockners eintretenden zu trocknenden Klärschlamms und/oder die Menge des über den Auslass des Scheibenkontakttrockners aus dem Trocknungsraum austretenden getrockneten Klärschlamms basierend auf den Messdaten des Eingangssensors und des Ausgangssensors und unter Berücksichtigung von einer oder mehreren Prozessgrößen der Verbrennungsanlage zu regeln.

Hinsichtlich der Heizleistung und/oder der Menge des über den Einlass in den Trocknungsraum des Scheibenkontakttrockners eintretenden zu trocknenden Klärschlamms und/oder der Menge des über den Auslass des Scheibenkontakttrockners aus dem Trocknungsraum austretenden getrockneten Klärschlamms wird auf die bisherige bzw. nachfolgende Beschreibung verwiesen.

Durch die zusätzliche Berücksichtigung von einer oder mehreren Prozessgrößen der Verbrennungsanlage ist es schließlich möglich, den Betrieb der Trocknungsanlage optimal an den Verbrennungsprozess in der Verbrennungsanlage anzupassen, so dass die Energieeffizienz der Trocknungsanlage und/oder der Verbrennungsanlage maximiert werden kann.

Eine weitere Prozessgröße, die berücksichtigt werden könnte, ist beispielsweise der Massenstrom des der Verbrennungsanlage zugeführten Klärschlamms. Wird dieser beispielsweise erhöht, so ist es von Vorteil, auch die Heizleistung des Scheibenkontakttrockners zu erhöhen und auch den Massenstrom des in den Scheibenkontakttrockner eintretenden Klärschlamms bzw. des aus dem Scheibenkontakttrockner austretenden Klärschlamms zu steigern. Eine gegenteilige Anpassung kann dann von Vorteil sein, wenn der Massenstrom des der Verbrennungsanlage zugeführten Klärschlamms verringert wird.

Das erfindungsgemäße Verfahren zeichnet sich dadurch aus, dass die Drehzahl der Scheiben und/oder die Heizleistung und/oder die Menge des in den Trocknungsraum eintretenden zu trocknenden Klärschlamms und/oder die Menge des aus dem Trocknungsraum austretenden getrockneten Klärschlamms basierend auf der Anfangsfeuchte des zu trocknenden Klärschlamms und der Endfeuchte des getrockneten Klärschlamms geregelt wird.

Im Gegensatz zum Stand der Technik wird bei dem erfindungsgemäßen Verfahren also sowohl die Anfangsfeuchte als auch die Endfeuchte beim Betrieb der Trocknungsanlage berücksichtigt. Im Ergebnis ist es dadurch möglich, den Scheibenkontakttrockner optimal zu betreiben, da mehrere Parameter zur Verfügung stehen, über die das Verhältnis von Heizleistung und des den Scheibenkontakttrockner passierenden Klärschlamms angepasst werden kann.

Beispielsweise wäre es denkbar, die Heizleistung des Scheibenkontakttrockners und/oder die Drehzahl der Scheiben zu erhöhen, wenn die Anfangsfeuchte steigt. Ebenso könnte die Heizleistung oder die Drehzahl der Scheiben verringert werden, wenn die Anfangsfeuchte sinkt. Soll die Heizleistung konstant bleiben, so wäre es auch denkbar, den Massenstrom des in den Trocknungsraum eintretenden Klärschlamms zu reduzieren, wenn dessen Anfangsfeuchte steigt oder den Massenstrom zu steigern, wenn die Anfangsfeuchte des in den Trocknungsraum eintretenden Klärschlamms über die Zeit gesehen sinkt. Eine entsprechende Regelung des Massenstroms des den Scheibenkontakttrockner verlassenden Klärschlamms ist zusätzlich oder alternativ ebenso denkbar (Steigerung des Massenstroms bei höherer Heizleistung oder geringerer Anfangsfeuchte bzw. Verringerung des Massenstroms bei geringerer Heizleistung oder höherer Anfangsfeuchte).

Ebenso ist es vorteilhaft, wenn die Heizleistung und/oder die Menge des in den Trocknungsraum eintretenden zu trocknenden Klärschlamms und/oder die Menge des über den Auslass aus dem Trocknungsraum austretenden getrockneten Klärschlamms derart geregelt wird, dass der getrocknete Klärschlamm eine Endfeuchte aufweist, dessen Betrag zwischen 52% und 62% Feuchte, vorzugsweise zwischen 55% und 60% Feuchte liegt. Ein Betrag von unterhalb von 62% Feuchte stellt sicher, dass der getrocknete Klärschlamm in einer nachgeordneten Verbrennungsanlage verbrannt werden kann. Bei der Verbrennungsanlage handelt es sich vorzugsweise im Rahmen der Erfindung (d.h. auch im Zusammenhang mit der erfindungsgemäßen Trocknungsanlage bzw. dem oben beschriebenen Verbund) um eine Wirbelschichtverbrennungsanlage. Gleichzeitig ist es von Vorteil, wenn die Endtrockensubstanz bei der Teiltrocknung nicht beliebig verringert wird. Insbesondere sollte diese unterhalb von 0%, vorzugsweise unterhalb von 45% liegen. Dies stellt sicher, dass der Klärschlamm innerhalb des Scheibenkontakttrockners nicht seine Leimphase erreicht, da ein Erreichen der Leimphase zum Blockieren des Scheibenkontakttrockners führen könnte (Klärschlamm weist im Bereich von 40% - 55% Trockensubstanz bzw. 45% bis 60% Feuchte äußerst klebrige Eigenschaften auf; diesen Bereich bezeichnet man als Leimphase).

In einer alternativen Ausführung ist es auch denkbar, dass der Klärschlamm innerhalb des Trocknungsraums auf eine Endfeuchte getrocknet wird, dessen Betrag unterhalb von 20%, vorzugsweise zwischen 2% und 20% Feuchte, vorzugsweise zwischen 5% und 10% Feuchte, liegt (dies wird als Volltrocknung bezeichnet). In diesem Fall ist jedoch dem über den Einlass in den Trocknungsraum eintretenden Klärschlamm in Abhängigkeit seiner Anfangsfeuchte so viel getrockneter Klärschlamm zuzumischen, dass die Anfangsfeuchte der Mischung unter 40% liegt, um zu verhindern, dass die Mischung während der Trocknung eine Feuchte aufweist, die im Bereich der Leimphasen-Feuchte liegt. Beispielsweise wäre es denkbar, die Mischung auf eine Endfeuchte von 10% zu trocknen und einen Teil der getrockneten Mischung einem entwässerten Klärschlamm zuzumischen, um hierbei erneut eine Mischung zu erhalten, deren Anfangsfeuchte unterhalb von 40% liegt.

Ebenso bringt es Vorteile mit sich, wenn die Anfangsfeuchte im Bereich eines Einlasses des Scheibenkontakttrockners, im Bereich einer mit dem Einlass verbundenen Eingangs-Schlammleitung, im Bereich einer mit dem Einlass verbundenen Eingangs-Fördereinrichtung oder im Bereich eines mit dem Einlass verbundenen Eingangsspeichers gemessen wird. Zusätzlich oder alternativ kann die Endfeuchte im Bereich eines Auslasses des Scheibenkontakttrockners, im Bereich einer mit dem Auslass verbundenen Ausgangs-Schlammleitung, im Bereich einer mit dem Auslass verbundenen Ausgangs-Fördereinrichtung, im Bereich eines mit dem Auslass verbundenen Ausgangsspeichers oder im Bereich einer Speicherfördereinrichtung des Ausgangsspeichers gemessen werden. Auch in diesem Zusammenhang wird auf die obige bzw. nachfolgende Beschreibung verwiesen.

Insbesondere ist es von Vorteil, wenn bei dem Verfahren eine Trocknungsanlage gemäß obiger bzw. nachfolgender Beschreibung zum Einsatz kommt. Ebenso kann die erfindungsgemäße Trocknungsanlage ausgebildet sein, gemäß dem beschriebenen Verfahren betrieben zu werden.

Weitere Vorteile der Erfindung sind in den nachfolgenden Ausführungsbeispielen beschrieben. Es zeigen, jeweils schematisch:
- **Figur 1**: eine erfindungsgemäße Trocknungsanlage, und
- **Figur 2**: einen Ausschnitt aus einer erfindungsgemäßen Trocknungsanlage.

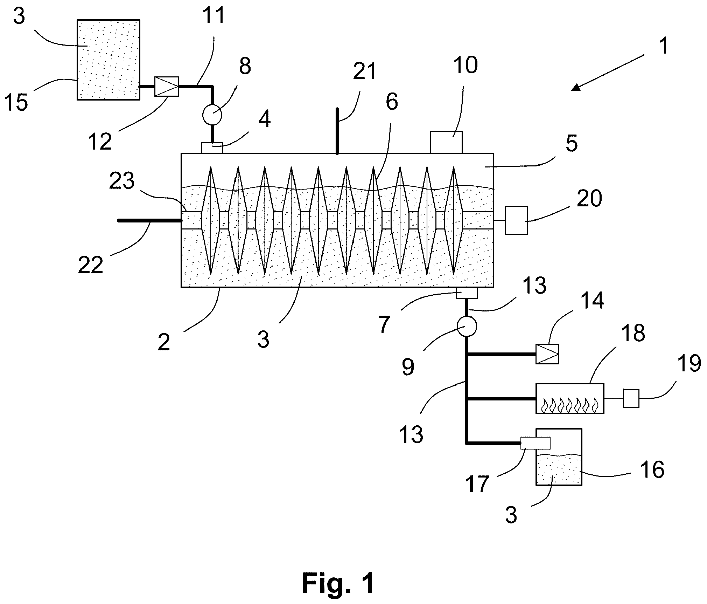

Figur 1 zeigt eine erfindungsgemäße Trocknungsanlage 1 zum Trocknen von Klärschlamm 3. Die Trocknungsanlage 1 umfassend einen Scheibenkontakttrockner 2 mit einem Trocknungsraum 5 sowie mehreren innerhalb des Trocknungsraums 5 angeordneten Scheiben 6. Die Scheiben 6 sind vorzugsweise mit Hilfe eines Antriebs 20 verbunden, welcher beim Betrieb des Scheibenkontakttrockners 2 eine Rotation der Scheiben 6 bewirkt, um den Wärmeübergang von den Scheiben 6 auf den Klärschlamm 3 zu optimieren. Zur Erwärmung der Scheiben 6 sind diese mit einem Heizmittelzulauf 22 verbunden, über den das Innere der Scheiben 6, vorzugsweise über eine die Scheiben 6 verbindende Welle 23, mit einer erhitzten Flüssigkeit, beispielsweise Wasser oder einem Thermoöl oder mit erhitztem Wasserdampf beschickt werden können, um die Scheiben 6 zu erwärmen. Die aus dem Klärschlamm 3 während der Trocknung austretende Feuchtigkeit gelangt schließlich über einen Brüdenabzug 21 nach außerhalb des Trocknungsraums 5.

Ferner umfasst der Scheibenkontakttrockner 2 einen Einlass 4, über den der zu trocknenden Klärschlamm 3 in den Trocknungsraum 5 gelangt. Um den getrockneten Klärschlamm aus dem Trocknungsraum 5 abführen zu können, ist darüber hinaus ein Auslass 7 für den Klärschlamm 3 vorhanden.

Der Einlass 4 ist im gezeigten Ausführungsbeispiel über eine Eingangs-Schlammleitung 11 mit einem Eingangsspeicher 15 verbunden, in dem der zu trocknenden Klärschlamm 3 für die Trocknung vorgehalten wird. Im gezeigten Beispiel ist zudem eine Eingangs-Fördereinrichtung 12 vorhanden, welche den Transport des Klärschlamms 3 vom Eingangsspeicher 15 in den Trocknungsraum 5 bewirkt.

Alternativ kann auf den Eingangsspeicher 15 auch verzichtet werden, wenn der zu trocknende Klärschlamm 3 kontinuierlich, beispielsweise über eine Fördereinrichtung, die mit einer den Klärschlamm 3 liefernden Einrichtung verbunden ist, zu dem Scheibenkontakttrockner 2 transportiert wird.

Der Auslass 7 ist im gezeigten Ausführungsbeispiel mit einer Ausgangs-Schlammleitung 13 verbunden, über die der getrocknete Klärschlamm 3 aus dem Trocknungsraum 5 abgeführt wird. Die Ausgangs-Schlammleitung 13 kann eine Ausgangs-Fördereinrichtung 14 umfassen, die einen aktiven Transport des getrockneten Klärschlamms 3 zu einer weiteren Einrichtung bewirkt, in der der getrocknete Klärschlamm 3 weiterverarbeitet wird.

Ebenso ist es denkbar, dass die Ausgangs-Fördereinrichtung 14 dazu dient, den getrockneten Klärschlamm 3 in den Bereich eines nicht dargestellten Ausgangs der Trocknungsanlage 1 zu befördern, an dem der getrocknete Klärschlamm 3 abtransportiert wird.

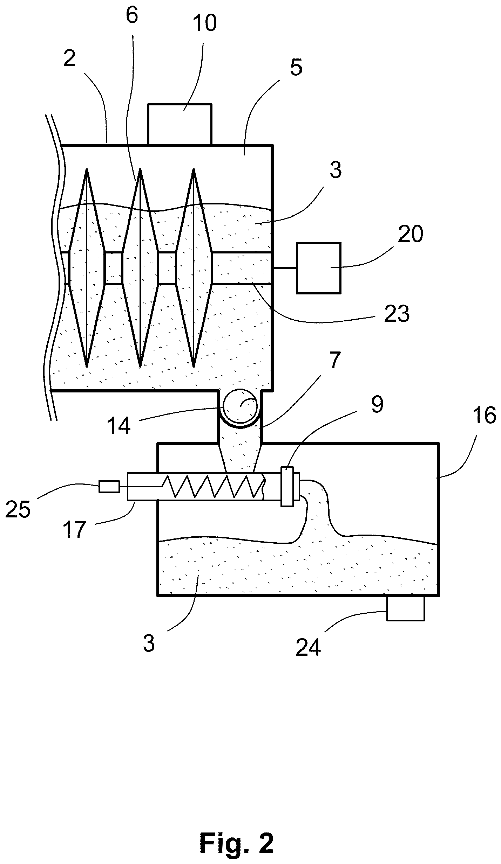

Ferner kann die Ausgangs-Schlammleitung 13 in eine Verbrennungsanlage 18 münden, wobei auch in diesem Bereich der Ausgangs-Schlammleitung 13 eine Fördereinrichtung für den Klärschlamm 3 vorhanden sein könnte. Schließlich ist es denkbar, dass die Ausgangs-Schlammleitung 13 in einen Ausgangsspeicher 16 mündet, welcher der Zwischenlagerung des getrockneten Klärschlamms 3 dient. Hierbei ist es von Vorteil, wenn der Ausgangsspeicher 16 eine Speicherfördereinrichtung 17 umfasst, welche eine Bewegung des Klärschlamms 3 von der Ausgangs-Schlammleitung 13 in den Ausgangsspeicher 16 sicherstellt. Ein weiterer Vorteil der Speicherfördereinrichtung 17 ist später im Zusammenhang mit Figur 2 beschrieben.

Die beschriebenen Einrichtungen (Ausgangs-Fördereinrichtung 14, Verbrennungsanlage 18, Ausgangsspeicher 16) können bei der erfindungsgemäßen Trocknungsanlage 1 einzeln und oder in beliebiger Kombination vorhanden sein, wobei die Kombination aus Trocknungsanlage 1 und Verbrennungsanlage 18 den erfindungsgemäßen Verbund bilden würden. Der Verbund bzw. die Verbrennungsanlage 18 können in diesem Fall eine separate Steuereinheit 19 aufweisen, mit deren Hilfe sich die Verbrennung beeinflussen lässt.

Um den Trocknungsvorgang des Klärschlamms 3 innerhalb des Trocknungsraums 5 zuverlässig regulieren zu können, umfasst die Trocknungsanlage 1 einen Eingangssensor 8 zur Messung der Anfangsfeuchte des in den Trocknungsraum 5 eintretenden Klärschlamms 3. Ebenso ist ein Ausgangssensor 9 vorhanden, mit dessen Hilfe sich die Endfeuchte des getrockneten Klärschlamms 3 im Bereich oder nach dem Auslass 7 ermitteln lässt. Hinsichtlich möglicher Sensoren 8, 9 wird auf die obige Beschreibung verwiesen.

Insbesondere ist es von Vorteil, wenn der Eingangssensor 8 in die Eingangs-Schlammleitung 11 und der Ausgangssensor 9 in die Ausgangs-Schlammleitung 13 integriert ist.

Sowohl der Eingangssensor 8 als auch der Ausgangssensor 9 sind mit einer Steuerung 10 verbunden. Die Steuerung 10 wertet die Messdaten der Sensoren 8, 9 aus und regelt basierend auf den Messdaten die Heizleistung des Scheibenkontakttrockners 2 und/oder den Massenstrom des über den Einlass 4 in den Trocknungsraum 5 eintretenden Klärschlamms 3 und/oder den Massenstrom des aus dem Trocknungsraum 5 austretenden Klärschlamms 3.

Beispielsweise wäre es des Weiteren möglich, dass die oben genannte Steuereinheit 19 die Sauerstoffzufuhr bzw. Luftzufuhr der Verbrennungsanlage 18 basierend auf den Daten des Eingangssensors 8 und/oder des Ausgangssensors 9 regelt. Insbesondere kann die Steuereinheit 19 direkt mit den genannten Sensoren 8, 9 verbunden sein. Auch eine Verbindung mit einer Steuerung 10 der Trocknungsanlage 1 ist denkbar.

Figur 2 zeigt eine Alternative zur Ausführung in Figur 1, bei der der Scheibenkontakttrockner 2 mit einem Ausgangsspeicher 16 verbunden ist, wobei lediglich ein Ausschnitt der Trocknungsanlage 1 dargestellt ist. Der Scheibenkontakttrockner 2 besitzt im Bereich seines Auslasses 7 eine Ausgangs-Fördereinrichtung 14 in Form einer Förderschnecke, über die der getrocknete Klärschlamm 3 aus dem Trocknungsraum 5 einer Speicherfördereinrichtung 17 zugeführt wird.

Die Speicherfördereinrichtung 17 umfasst im gezeigten Beispiel eine Förderschnecke, die mit einer Antriebseinheit 25 in Verbindung steht. Mit Hilfe der Förderschnecke wird der vom Trocknungsraum 5 kommende Klärschlamm 3 in den Ausgangsspeicher 16 transportiert, wobei der Klärschlamm 3 hierbei den Ausgangssensor 9 passiert, welcher vorzugsweise ringförmig um die Speicherfördereinrichtung 17 platziert ist. Selbstverständlich kann ein Teil des aus dem Auslass 7 austretenden Klärschlamms 3 auch an der Speicherfördereinrichtung 17 vorbei in den Ausgangsspeicher 16 strömen bzw. fallen, so dass nur ein Teil des genannten Klärschlamms 3 durch die Speicherfördereinrichtung 17 gefördert wird.

Insbesondere ist der Ausgangssensor 9 im gezeigten Beispiel als Mikrowellensensor ausgebildet, mit dessen Hilfe sich die Endfeuchte des Klärschlamms 3 bestimmen lässt. Hierdurch ist eine besonders zuverlässige Messung der Endfeuchte des Klärschlamms 3 möglich, da dieser mit konstantem bzw. reproduzierbarem Massenstrom durch die Speicherfördereinrichtung 17 transportiert wird.

Die vorliegende Erfindung ist nicht auf die dargestellten und beschriebenen Ausführungsbeispiele beschränkt. Abwandlungen im Rahmen der Patentansprüche sind ebenso möglich wie eine beliebige Kombination der beschriebenen Merkmale, auch wenn sie in unterschiedlichen Teilen der Beschreibung bzw. den Ansprüchen oder in unterschiedlichen Ausführungsbeispielen dargestellt und beschrieben sind, vorausgesetzt, dass kein Widerspruch zur Lehre der unabhängigen Ansprüche entsteht.

### Bezugszeichenliste

- 1: Trocknungsanlage
- 2: Scheibenkontakttrockner
- 3: Klärschlamm
- 4: Einlass
- 5: Trocknungsraum
- 6: Scheibe
- 7: Auslass
- 8: Eingangssensor
- 9: Ausgangssensor
- 10: Steuerung
- 11: Eingangs-Schlammleitung
- 12: Eingangs-Fördereinrichtung
- 13: Ausgangs-Schlammleitung
- 14: Ausgangs-Fördereinrichtung
- 15: Eingangsspeicher
- 16: Ausgangsspeicher
- 17: Speicherfördereinrichtung
- 18: Verbrennungsanlage
- 19: Steuereinheit
- 20: Antrieb
- 21: Brüdenabzug
- 22: Heizmittelzulauf
- 23: Welle
- 24: Ausgangsspeicherauslass
- 25: Antriebseinheit

## Patentansprüche

1. Trocknungsanlage (1), umfassend einen Scheibenkontakttrockner (2) zum Trocknen von teilentwässertem Klärschlamm (3), wobei der Scheibenkontakttrockner (2) umfasst:
- zumindest einen Einlass (4) für den zu trocknenden Klärschlamm (3),
- einen sich an den Einlass (4) anschließenden Trocknungsraum (5) zur temporären Aufnahme des über den Einlass (4) eintretenden zu trocknenden Klärschlamms (3),
- mehrere innerhalb des Trocknungsraums (5) benachbart zueinander angeordnete Scheiben (6), die im Betrieb des Scheibenkontakttrockners (2) mit dem Klärschlamm (3) in Kontakt stehen und mit Hilfe eines Antriebs (20) des Scheibenkontakttrockners (2) mit einer definierten Drehzahl rotiert werden, wobei die Scheiben (6) mit einer definierten Heizleistung beaufschlagt werden, um dem zu trocknenden Klärschlamm (3) Wärme zuzuführen und dabei eine Verdampfung der im zu trocknenden Klärschlamm (3) vorhandenen Flüssigkeit zu bewirken, und
- wobei der Scheibenkontakttrockner (2) darüber hinaus zumindest einen Auslass (7) für den im Trocknungsraum (5) getrockneten Klärschlamm (3) umfasst, **dadurch gekennzeichnet,**
**dass** die Trocknungsanlage (1) einen Eingangssensor (8) zur Ermittlung der Anfangsfeuchte des zu trocknenden Klärschlamms (3) und einen Ausgangssensor (9) zur Ermittlung der Endfeuchte des im Trocknungsraum (5) getrockneten Klärschlamms (3) aufweist, und dass die Trocknungsanlage (1) eine Steuerung (10) umfasst, die ausgebildet ist, die Drehzahl der Scheiben (6) und/oder die Heizleistung des Scheibenkontakttrockners (2) und/oder die Menge des über den Einlass (4) in den Trocknungsraum (5) eintretenden, zu trocknenden Klärschlamms (3) und/oder die Menge des über den Auslass (7) aus dem Trocknungsraum (5) austretenden, getrockneten Klärschlamms (3), basierend auf den Messdaten des Eingangssensors (8) und des Ausgangssensors (9) zu regeln.

2. Trocknungsanlage (1) gemäß dem vorangegangenen Anspruch, **dadurch gekennzeichnet, dass** der Einlass (4) mit einer Eingangs-Schlammleitung (11) der Trocknungsanlage (1) oder einer Eingangs-Fördereinrichtung (12) der Trocknungsanlage (1), die dem Transport des getrockneten Klärschlamms (3) dient, verbunden ist, wobei die Eingangs-Fördereinrichtung (12) insbesondere als Eingangs-Förderschnecke ausgebildet ist.

3. Trocknungsanlage (1) gemäß einem der vorangegangenen Ansprüche, **dadurch gekennzeichnet, dass** der Auslass (7) mit einer Ausgangs-Schlammleitung (13) der Trocknungsanlage (1) oder einer Ausgangs-Fördereinrichtung (14) der Trocknungsanlage (1), die dem Transport des getrockneten Klärschlamms (3) dient, verbunden ist, wobei die Ausgangs-Fördereinrichtung (14) insbesondere als Ausgangs-Förderschnecke ausgebildet ist.

4. Trocknungsanlage (1) gemäß einem der vorangegangenen Ansprüche, **dadurch gekennzeichnet, dass** die Trocknungsanlage (1) einen Eingangsspeicher (15) zum Zwischenspeichern des zu trocknenden Klärschlamms (3) vor der Trocknung und/oder einen Ausgangsspeicher (16) zum Zwischenspeichern des getrockneten Klärschlamms (3) vor einer Weiterbehandlung umfasst.

5. Trocknungsanlage (1) gemäß einem der vorangegangenen Ansprüche, **dadurch gekennzeichnet, dass** der Ausgangsspeicher (16) eine Speicherfördereinrichtung (17), insbesondere eine Speicherförderschnecke, umfasst, über die zumindest ein Teil des getrockneten Klärschlamms (3) beim Betrieb der Trocknungsanlage (1) in den Ausgangsspeicher (16) gelangt.

6. Trocknungsanlage (1) gemäß einem der vorangegangenen Ansprüche, **dadurch gekennzeichnet, dass** der Ausgangssensor (9) im Bereich der Speicherfördereinrichtung (17) angeordnet ist.

7. Trocknungsanlage (1) gemäß einem der vorangegangenen Ansprüche, **dadurch gekennzeichnet, dass** der Eingangssensor (8) im Bereich des Einlasses (4), im Bereich der Eingangs-Schlammleitung (11), im Bereich der Eingangs-Fördereinrichtung (12) oder im Bereich des Eingangsspeichers (15) angeordnet ist, und/oder dass der Ausgangssensor (9) im Bereich des Auslasses (7), im Bereich der Ausgangs-Schlammleitung (13), im Bereich der Ausgangs-Fördereinrichtung (14) oder im Bereich des Ausgangsspeichers (16) angeordnet ist.

8. Trocknungsanlage (1) gemäß einem der vorangegangenen Ansprüche, **dadurch gekennzeichnet, dass** der Eingangssensor (8) und/oder der Ausgangssensor (9) als Mikrowellensensor oder Nahinfrarotsensor ausgebildet ist.

9. Verbund aus einer Trocknungsanlage (1) gemäß einem der vorangegangenen Ansprüche und einer Verbrennungsanlage (18) zur Verbrennung des aus der Trocknungsanlage (1) stammenden getrockneten Klärschlamms (3), **dadurch gekennzeichnet, dass** der Verbund eine Steuereinheit (19) umfasst, die ausgebildet ist, die Heizleistung und/oder die Menge des über den Einlass (4) in den Trocknungsraum (5) des Scheibenkontakttrockners (2) eintretenden zu trocknenden Klärschlamms (3) und/oder die Menge des über den Auslass (7) des Scheibenkontakttrockners (2) aus dem Trocknungsraum (5) austretenden getrockneten Klärschlamms (3) und/oder die Drehzahl der Scheiben (6) basierend auf den Messdaten des Eingangssensors (8) und des Ausgangssensors (9) und unter Berücksichtigung von einer oder mehreren Prozessgrößen der Verbrennungsanlage (18) zu regeln.

10. Verfahren zum Betreiben einer Trocknungsanlage (1), insbesondere einer Trocknungsanlage (1) gemäß einem der Ansprüche 1 bis 8, umfassend einen Scheibenkontakttrockner (2) mit einem Trocknungsraum (5) zum Trocknen von teilentwässertem Klärschlamm (3), und mit mehreren innerhalb des Trocknungsraums (5) benachbart zueinander angeordneten und mit einer definierten Drehzahl rotierenden Scheiben (6), die im Betrieb des Scheibenkontakttrockners (2) mit dem Klärschlamm (3) in Kontakt stehen und mit einer definierten Heizleistung beaufschlagt werden, um dem zu trocknenden Klärschlamm (3) Wärme zuzuführen und dabei eine Verdampfung der im zu trocknenden Klärschlamm (3) vorhandenen Flüssigkeit zu bewirken, **dadurch gekennzeichnet, dass** die Drehzahl der Scheiben (6) und/oder die Heizleistung und/oder die Menge des in den Trocknungsraum (5) eintretenden zu trocknenden Klärschlamms (3) und/oder die Menge des aus dem Trocknungsraum (5) austretenden getrockneten Klärschlamms (3) basierend auf der Anfangsfeuchte des zu trocknenden Klärschlamms (3) und der Endfeuchte des getrockneten Klärschlamms (3) geregelt wird.

11. Verfahren gemäß dem vorangegangenen Anspruch, **dadurch gekennzeichnet, dass** die Heizleistung und/oder die Menge des in den Trocknungsraum (5) eintretenden, zu trocknenden Klärschlamms (3) und/oder die Menge des über den Auslass (7) aus dem Trocknungsraum (5) austretenden getrockneten Klärschlamms (3) derart geregelt wird, dass der getrocknete Klärschlamm (3) eine Endfeuchte aufweist, dessen Betrag zwischen 52% und 62% Feuchte, vorzugsweise zwischen 55% und 60% Feuchte , oder zwischen 2% und 20% Feuchte, vorzugsweise zwischen 5% und 10% Feuchte , liegt.

12. Verfahren gemäß Anspruch 10 oder 11, **dadurch gekennzeichnet, dass** die Anfangsfeuchte im Bereich eines Einlasses (4) des Scheibenkontakttrockners (2), im Bereich einer mit dem Einlass (4) verbundenen Eingangs-Schlammleitung (11), im Bereich einer mit dem Einlass (4) verbundenen Eingangs-Fördereinrichtung (12) oder im Bereich eines mit dem Einlass (4) verbundenen Eingangsspeichers (15) gemessen wird, und/oder dass die Endfeuchte im Bereich eines Auslasses (7) des Scheibenkontakttrockners (2), im Bereich einer mit dem Auslass (7) verbundenen Ausgangs-Schlammleitung (13), im Bereich einer mit dem Auslass (7) verbundenen Ausgangs-Fördereinrichtung (14), im Bereich eines mit dem Auslass (7) verbundenen Ausgangsspeichers (16) oder im Bereich einer Speicherfördereinrichtung (17) des Ausgangsspeichers (16) gemessen wird.
